# EUROPEAN PATENT APPLICATION

(11) **EP 4 725 762 A1**
(43) Date of publication of application: **15.04.2026**
(21) Application number: 25204970.5
(22) Date of filing: 26.09.2025
(51) Int. Cl.: B60P 1/48

(54) **LOAD HANDLING CONTROLLER, ARRANGEMENT, METHOD AND COMPUTER PROGRAM PRODUCT**

(71) Applicant: Hiab AB, 215 32 Malmö (SE)
(72) Inventor: KOIVUMÄKI, Janne, 33720 Tampere (FI); TAHAMIPOURZARANDI, Seyedmohammad, 33900 Tampere (FI); VIHONEN, Juho, 33100 Tampere (FI); AREF, Mohammad, 33610 Tampere (FI); RAIVIO, Leevi, 33720 Tampere (FI); VILKKA, Aleksi, 37140 Nokia (FI); SIREN, Pasi, 21610 Kirjala (FI); NYSTRÖM, Mikko, 21290 Rusko (FI)
(74) Representative: Papula Oy

(57) **Abstract**

Disclosed is a load handling controller, an arrangement, a method and a computer program product. The controller is arranged for controlling movement of a mobile load handling arrangement comprising a boom and a load attachment tool for handling a load for a cargo vehicle. An estimated contact force for a contact between the load attachment tool and an object is determined, a value for a responsiveness parameter indicating the responsiveness of the load attachment tool to the contact is obtained, and an actuation of one or more actuators of the mobile load handling arrangement for actuating movement of the boom is adapted based on the estimated contact force and the value for the responsiveness parameter.

## Description

### FIELD

The present disclosure relates to load handing for a cargo vehicle, such as a truck or a lorry.

### BACKGROUND

Cargo vehicles, such as trucks and lorries, are widely used for transporting containers, bins and other loads. Efficient loading and unloading of such cargo allow minimizing downtime and improving operational efficiency. As load handling for the cargo vehicles is automated, opportunities to further improve the load handling process abound. A question then arises; how can the safety and efficiency of load handling be improved.

### SUMMARY

An objective is to provide improved solutions for load handling, in particular for loading/unloading a cargo vehicle.

According to a first aspect, a load handling controller for controlling load handling of a cargo vehicle is disclosed. The load handling controller is arranged for controlling movement of a mobile load handling arrangement comprising a boom and a load attachment tool for handling a load for the cargo vehicle. The load handling controller is arranged to determine an estimated contact force for a contact between the load attachment tool and an object. The load handling controller is also arranged to obtain a value for a responsiveness parameter indicating the responsiveness of the load attachment tool to the contact. The load handling controller is then arranged to adapt an actuation of one or more actuators of the mobile load handling arrangement for actuating movement of the boom based on the estimated contact force and the value for the responsiveness parameter.

The solution allows the contact between the load attachment tool and the object to be controlled in a compliant manner. The contact forces between the load attachment tool and the object can thus be mitigated, for example to prevent the object from being damaged upon contact to the load attachment tool. The solution allows the responsiveness of the load attachment tool with respect to the contact with the object to be made variable, thereby allowing different responsiveness in different situations.

In an embodiment, the load handling controller is arranged to adapt the actuation of the one or more actuators based on a phase of a load handling sequence. This allows the responsiveness of the load attachment tool with respect to the contact with the object to be different for different phases of the load handling sequence, such as for coupling to the load and for moving the load.

In an embodiment, the value for the responsiveness parameter is based on a position indicator for the load attachment tool. This allows the responsiveness of the load attachment tool with respect to the contact with the object to be different for different positions of the load attachment tool. Since there can be uncertainty in the position of the object, the responsiveness of the load attachment tool with respect to the contact with the object may be changed, e.g. increased, as the load attachment approaches a target position for the load attachment tool.

In an embodiment, the estimated contact force corresponds to an impact force between the load attachment tool and the object. This allows the impact of the load attachment tool to be controlled, in particular for softening the impact by the actuation of the one or more actuators. Impact damage to the load attachment tool and/or to the object can thus be mitigated.

In an embodiment, the load handling controller is arranged to permit the one or more actuators to provide a first degree of responsiveness for the load attachment tool when the load attachment tool is uncoupled with respect to the load and a second degree of responsiveness for the load attachment tool when the load attachment tool is coupled to the load, wherein the second degree of responsiveness is larger than the first degree of responsiveness.

In an embodiment, the load handling controller is arranged for utilizing a first value for the responsiveness parameter when the load attachment tool is uncoupled with respect to the load and a second value for the responsiveness parameter when the load attachment tool is coupled to the load, wherein the first value indicates larger responsiveness of the load attachment tool to the contact than the second value. This allows the response of the load attachment tool to the contact to be stiffened after the load attachment tool has been coupled to the load.

In an embodiment, the load handling controller is arranged for impedance control of the actuation of the one or more actuators. The motion-force relation of the load attachment tool can thus be controlled, which allows adapting the movement of the load attachment tool by the one or more actuators, e.g. to soften the contact of the load attachment tool to the object.

In an embodiment, the load handling controller is arranged to adapt the actuation of the one or more actuators to prevent a magnitude of the estimated contact force from exceeding a threshold magnitude and/or a rate of change for the estimated contact force from exceeding a threshold rate. This allows setting an upper limit for interaction strength between the load attachment tool and the object.

In an embodiment, the load handling controller is arranged to determine whether coupling of the load attachment tool to the load is completed based on the estimated contact force. This allows automated determination of the coupling.

In an embodiment, the load handling controller is arranged to determine a first estimated contact force in a first direction and a second estimated contact force in a second direction, the second direction being non-parallel with respect to the first direction. The load handling controller may then be further arranged for utilizing one value (herein a "third" value) for the responsiveness parameter in the first direction and another value (herein a "fourth" value) for the responsiveness parameter tool in the second direction, wherein the third value indicates larger responsiveness of the load attachment tool to the contact than the fourth value. This allows the responsiveness of the load attachment tool with respect to the contact with the load to be variable in space, i.e. different in two different directions. Alternatively or additionally, the load handling controller may be arranged to guide the load attachment tool to establish a coupling with the load based on the first estimated contact force and the second estimated contact force. The estimated contact force can thus be used for actuating the one or more actuators to establish fine control of movements of the load attachment tool.

In an embodiment, the load handling controller is arranged to generate one or more haptic feedback control signals based on the estimated contact force. This allows the contact to be physically transmitted to an operator. In particular, the force of the contact can be physically transmitted in a variable manner, based on the estimated contact force.

In an embodiment, the load handling controller is arranged to determine the estimated contact force based on one or more indications of motion state of the boom and/or the cargo vehicle and one or more indications of actuation state of the one or more actuators. This allows the estimated contact force to be determined without contact sensors, which can be expensive and susceptible to damage. Using the motion state of the cargo vehicle further allows the estimated contact force to be determined with improved accuracy while the cargo vehicle is moving. Accordingly, the cargo vehicle does not need to be stopped for determining the estimated contact force, allowing for example the coupling of the load attachment tool and the load to be initiated, or even completed, while the cargo vehicle is moving.

According to a second aspect, an arrangement comprises a mobile load handling arrangement comprising a boom and a load attachment tool for handling a load for a cargo vehicle and the load handling controller according to the first aspect or any of its embodiments, alone or in any combination. The load handling controller can be arranged for controlling movement of the mobile load handling arrangement for handling the load for the cargo vehicle.

In an embodiment, the arrangement comprises the cargo vehicle.

According to a third aspect, a method for controlling a mobile load handling arrangement is disclosed. The mobile load handling arrangement comprises a boom and a load attachment tool for handling a load for the cargo vehicle. The method comprises determining an estimated contact force for a contact between the load attachment tool and an object and adjusting a degree of actuation of one or more actuators of the mobile load handling arrangement for actuating movement of the boom based on the estimated contact force.

According to a fourth aspect, a computer program product is disclosed. The computer program product comprises instructions which, when executed by a computer, cause the computer to carry out the method of the third aspect or any of its embodiments, alone any combination.

It is to be understood that the aspects and embodiments described above may be used in any combination with each other. Several of the aspects and embodiments may be combined together to form a further embodiment of the invention.

The disclosed solutions can allow multiple improvements in control of load handling for the cargo vehicle. Cargo vehicles provide control challenges as they constitute mobile platforms for load handling equipment. Here, the mobile load handling arrangement can thus have its own motion and dynamics in addition to the movement of the load. For example, tires of the cargo vehicle may constitute flexible elements affecting position of the mobile load handling arrangement during the load handling, even when the cargo vehicle itself is stationary.

The disclosed solutions may be used for safely automating motion control for self-loading capabilities of a cargo vehicle, which may be equipped with a mobile load handling arrangement such as a hook lift. The solutions may be used with various mobile load handling arrangements without structural redesign of the pre-existing mobile load handling arrangement.

For contact (herein also "the contact event"), the load handling controller may be arranged for determining a moment of impact between the load attachment tool and the object. It may also be arranged to regulate the impact force, in particular by adjusting the movement of the load attachment tool by adapting the actuation of the one or more actuators. It may thus prevent damage such as puncturing the load or causing it to bounce on slippery surfaces.

For coupling (herein also "the coupling event"), the load handling controller may be arranged for confirming that the coupling has been established, e.g. by analyzing rapid changes in momentum. The controller may distinguish between free space and contact, ensuring that the load attachment tool is securely coupled to the load. The mobile load handling arrangement can thus be prevented from lifting unless a rigid connection has been established.

For ground contact and/or load bed contact (herein also "the positioning event"), the load handling controller may be arranged for detecting a moment when the load comes into contact with respect to the ground or the load bed. It may be arranged to then prevent the load attachment tool from pushing the load into the ground or into the load bed, e.g. by regulating interaction forces. This allows improved safety, particularly if the cargo vehicle is not in neutral or its forward motion is blocked.

For decoupling (herein also "the decoupling event"), the controller may be arranged for detecting when the load attachment tool partially and/or fully detaches from the object. The controller may be arranged to sense changes in momentum between free space and contact, thereby ensuring a clean and controlled release.

The controller may be arranged for utilizing the estimated contact force to monitor the load handling, such as the loading and/or the unloading. It can be used to identify abnormal force behaviour, such as abnormally high or low force behaviour, with respect to expected force behaviour during the load handling. The abnormal force behaviour may occur for example due to misalignment of the load on the cargo vehicle or improper coupling of the load attachment tool to the load). When such a case is identified, the controller may stop the load handling, e.g. to prevent structural damages or the load from tipping over from the cargo vehicle.

Moreover, with new regulations (such as European Union Machinery Regulation 2023/1230/EU-Machinery, ISO 22737 standard for automated low speed driving and ISO 26262 standard for road vehicle functional safety, for example), various conditions for improving level of safety for cargo vehicles with mobile load handling arrangement are imposed. Accordingly, safety-increasing control means that regulate exerted forces, like the disclosed load handling controller, will play a significant role in risk mitigation. Using a reduced force to conduct a loading/unloading task can imply a lower risk. This disclosure provides an independent control measure for hazardous situations that could pose high risks without mitigation. For example, if the contact force cannot be regulated, it can potentially cause severe damage to an otherwise unobservable person or object behind the load. Thus, the proposed solution can be used to reduce high-risk systems (e.g., ASIL-C and ASIL-D systems with very strict safety requirements) to a low-risk system (e.g. ASIL-A and ASIL-B with less stringent requirements).

The disclosed solutions can allow providing a "tactile sense" for the load handling controller, such that contact forces at the load attachment tool can be estimated by using low-cost equipment, such as pressure sensors, which may be attached to hydraulic actuators, and motion sensors, which may be attached to the boom. This enables a possibility for controlling the interaction dynamics between the load attachment tool and its environment, e.g. a mechanical impedance/admittance as a force-motion relation for the interaction. A control software algorithm may be designed to prevent excessive contact forces and to make motions of the load attachment tool compliant when interacting with the environment, or the object, in particular. The disclosed solutions can enable a cost-effective (e.g. software-based) and scalable (easily extendable to different mobile load handling arrangements, and truck mounted working equipment like hook lifts hook lifts and cranes in particular) way for safe and compliant interaction of the load attachment tool with its environment, enabling, e.g., automated load-handling capabilities for a cargo vehicle. The disclosed solutions can be used for preventing excessive contact forces for the load attachment tool, thus, protecting both environmental objects and the machine itself from damage.

### BRIEF DESCRIPTION OF THE DRAWINGS

The accompanying drawings, which are included to provide a further understanding and constitute a part of this specification, illustrate examples and together with the description help to explain the principles of the disclosure. In the drawings:
**Fig. 1** schematically illustrates an arrangement according to an example,
**Figs. 2a****-d** illustrate a load handling sequence according to an example,
**Fig. 3** illustrates a system according to an example, and
**Fig. 4** illustrates a method according to an example.

Like references are used to designate equivalent or at least functionally equivalent parts in the accompanying drawings.

### DETAILED DESCRIPTION

The detailed description provided below in connection with the appended drawings is intended as a description of examples and is not intended to represent the only forms in which the example may be constructed or utilized. However, the same or equivalent functions and structures may be accomplished by different examples.

The presently disclosed solutions may be used for load handling. In particular, they may be arranged for user-assisted and/or autonomous load handling. The load handling may be performed fully autonomously or semi-autonomously, in which case an operator (human) may be manually controlling the load handling but compliance for the load handling may be provided automatically.

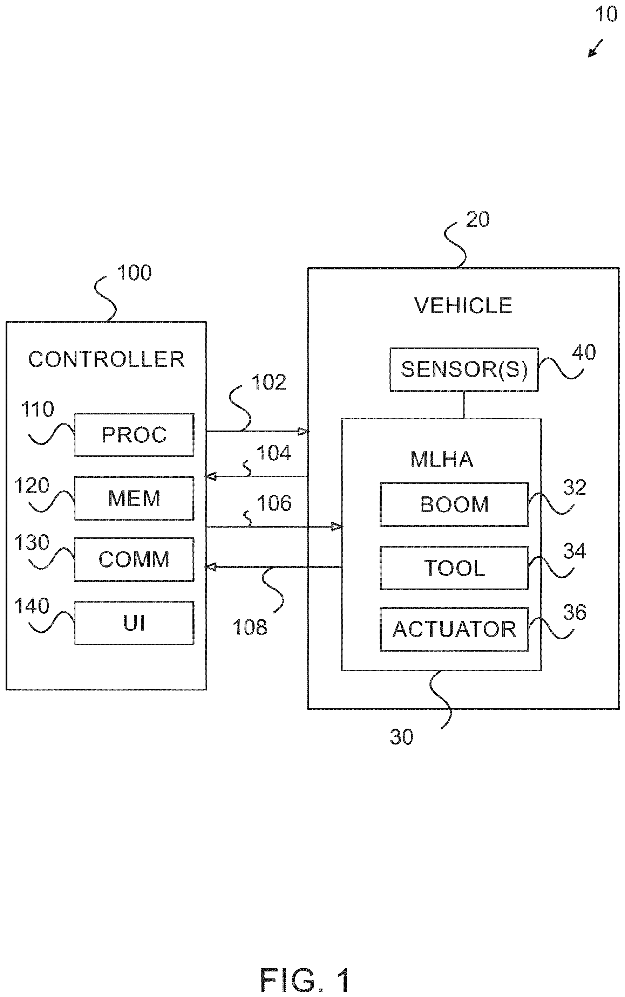

Fig. 1 illustrates an arrangement 10 according to an example. The arrangement comprises a load handling controller 100 (herein also "the controller"). The controller can be arranged for controlling load handling of a cargo vehicle 20 (herein also "the vehicle"). The load handling may comprise or consist of loading and/or unloading the cargo vehicle, i.e. loading a load 50 to the cargo vehicle and/or unloading the load from the cargo vehicle. The load may comprise or consist of any combination of a container (such as an ISO container or a flat rack), a bin, and/or other type of a load like a some logs, building material, cargo, recycling bins or other material.

The cargo vehicle 20 may be a land vehicle, such as a road vehicle. In particular, the vehicle may be a truck or a lorry. The vehicle may be a freely moving vehicle, allowing it to be positioned freely. The vehicle may be a wheeled vehicle, which can provide freedom of movement over a working surface. The vehicle may be manually operated, but it may also be an autonomous vehicle or a semi-autonomous vehicle. The vehicle may be arranged for various applications such as transportation, waste handling, and/or construction.

The cargo vehicle 20 may be equipped with a mobile load handling arrangement (MLHA) 30. The MLHA may be a part of the vehicle or separate from the vehicle, e.g. mounted at the vehicle for operation. The vehicle allows the MLHA to be operated in a mobile manner. The MLHA may comprise or consist of a hook lift, but it may also comprise or consist of other load handling systems such as a a skip loader, for example. Alternatively or additionally, the MLHA may comprise or consist of any of the following, for example: a crane, a roll off truck hoist, a tail lift and any other load handling equipment with a movable boom for the load handling. The crane may be a loader crane, truck-loaded crane, a forestry crane, a recycling crane or any vehicle-mounted crane. In general, the MLHA may be a vehicle mounted piece of equipment, such as a vehicle-mounted crane, in contrast to for example mobile cranes, which have their own chassis. The MLHA may be separable from the vehicle.

The MLHA comprises a boom 32 and a load attachment tool 34, which may be together arranged for handling the load 50 for the cargo vehicle, e.g. by lifting and/or lowering the load for loading and/or unloading the cargo vehicle 20. The boom may comprise two or more boom sections, which may be connected in series. The two or more boom sections may be connected movably with respect to each other, for example by one or more joints. They may thus be rotatable with respect to each other with one, two or three rotational degrees of freedom. The MLHA may comprise a base so that the boom is arranged between the base and the load attachment tool. The boom may be movable with respect to the base, e.g. rotatable with one, two or three rotational degrees of freedom. For this purpose, the boom may be coupled to the base by one or more joints. The boom, or any or all of the two or more boom sections, may also be extendable, e.g. by a telescopic extension. The MLHA may be arranged to be mounted, e.g. at the base, to the cargo vehicle. The base may also be an integral part of the cargo vehicle. The base may be coupled to a first end of the boom and/or the load attachment may be coupled to a second end of the boom. The load attachment tool may be coupled to the second end of the boom by a joint, which may also be considered a part of the boom.

The load attachment tool 34 may be arranged to be coupled to an object for lifting and/or lowering the object. The object as referred in this disclosure may be the load 50 but it can also be an intermediate object between the load attachment tool and the load, e.g. a load support such as a lift frame, which may be a container lift frame. On the other hand, compliance can also be applied at the lift frame, so the lift frame may also be provided as a part of the load attachment tool. The load attachment tool may thus comprise or consist of the lift frame, such as an ISO container lift frame or a flat rack lift frame, which lift frame may comprise which one or more actuators for locking the load to the lift frame. The load attachment tool may comprise or consist of a hook, or any application-specific tool, for attachment to the object. Alternatively or additionally, the load attachment tool may comprise or consist any of a gripper, a grapple, a bucket, a fork, a pallet fork and a personal basket, all of which may be arranged for attachment to the object, or the load.

The object, such as the load, may comprise a matching interface 52 for attachment to the load attachment tool, for example a bar such as a bail bar or an application-specific attachment interface. The load attachment tool 34 and/or the matching interface 52 may be adapted to the application. One example of this is when the MLHA comprises a truck mounted loader crane for collecting recycling material from underground bins. In this particular and illustrative example each underground bin has an upper part extending from the ground with an application-specific attachment interface as the matching interface. The loader crane can then be arranged with a matching load attachment tool that is adapted for a safe locking to the the bin's matching interface for lifting the bin. The solutions proposed herein may further be applied to support and guide the connection or coupling of the load attachment tool and the matching interface. This allows solving challenges with automating this type of load handling where the relative position of the tip of the boom and/or the load attachment tool with respect to the object, such as the load, has a degree of uncertainty.

The MLHA 30 may comprise one or more actuators 36 for actuating movement of the boom, or for actuating movement of any or all of the two or more boom sections when the boom has multiple sections. In particular, the one or more actuators may comprise or consist of one or more hydraulic cylinders, such as double acting hydraulic cylinders, each of which may comprise a first cylinder chamber and a second cylinder chamber. Alternatively or additionally, any or all of the one the one or more actuators may comprise or consist of an electro-mechanical actuator, an electro-hydraulic actuator or a pneumatic actuator.

The arrangement 10 may further comprise one or more sensors 40 (herein also "the sensors"). The sensors may comprise one or more sensors for observing a state of the vehicle 20, such as the motion state of the vehicle and/or one or more sensors for observing a state of the MLHA, such as the motion state of the MLHA, e.g. a motion state of the boom 32 and/or the load attachment tool 34. The sensors may also comprise one or more sensors for observing a state of the object and/or the load 50, e.g. a position of the object and/or the load. For example, the sensors may comprise any combination of one or more sensors for indicating force and/or momentum applied by any or all of the one or more actuators, e.g. pressure sensors and/or flow sensors for hydraulic actuator(s), one or more position sensors and/or movement sensors arranged for monitoring a position and/or movement of the boom (or any or all of the two or more boom sections), e.g. one or more angle sensors, optical sensors, wireless sensors, LIDARs, radars, and/or MEMS sensors such as accelerometers and/or gyros. The sensors may be arranged at the vehicle and/or at the MLHA but any or all of the sensors may also be provided remote from the vehicle.

The load handling controller 100 may be arranged to be mounted at the vehicle 20 and/or remote from the vehicle. The controller may be arranged as a localized or as a distributed control system. The controller may comprise one or more processors 110 (herein also "the processors") and one or more memories 120 (herein also "the memories"). The memories may comprise instructions which, when run by the processors cause any of the acts described herein. Similarly, a computer program product, which may be installed at the controller, may comprise instructions for any of the acts described herein. The controller may comprise a communication interface for communication with the vehicle and/or the MLHA 30. The controller may thus be arranged for causing control instructions 102, 106 being transmitted to the vehicle, e.g. to a vehicle control system, and/or to the MLHA, e.g. to a control system of the MLHA. The controller may also be arranged for receiving data 104, 108 from the vehicle, e.g. from the vehicle control system, and/or from the MLHA, e.g. from the control system of the MLHA. The data 104, 108 may be indicative of, for example, measurement data from the sensors 40.

The load handling controller 100 may be provided as a part of the vehicle control system and/or the control system of the MLHA, or it may be provided separately from the vehicle control system and/or the control system of the MLHA. The controller may comprise an user interface 140 for the operator (herein also "the UI"), which user interface may be arranged to communicate with a user interface device, which may comprise an input interface, such as a keyboard and/or a touch screen, and/or an output interface, such as a display and/or a touch screen. The UI may comprise a visual interface, which may include a visual input interface and/or a visual output interface. The UI may comprise an auditory interface, which may include an auditory input interface and/or an auditory output interface. The UI may comprise a haptic and/or tactile interface, which may include a haptic and/or tactile input interface and/or a haptic and/or tactile output interface. The user interface may be separate from a user interface of the vehicle and/or the MLHA or it may, partially or fully, correspond to the user interface of the vehicle and/or the MLHA.

The load handling controller 100 can be arranged for controlling movement of the MLHA for the load handling, e.g. by causing actuation of the one or more actuators 36.

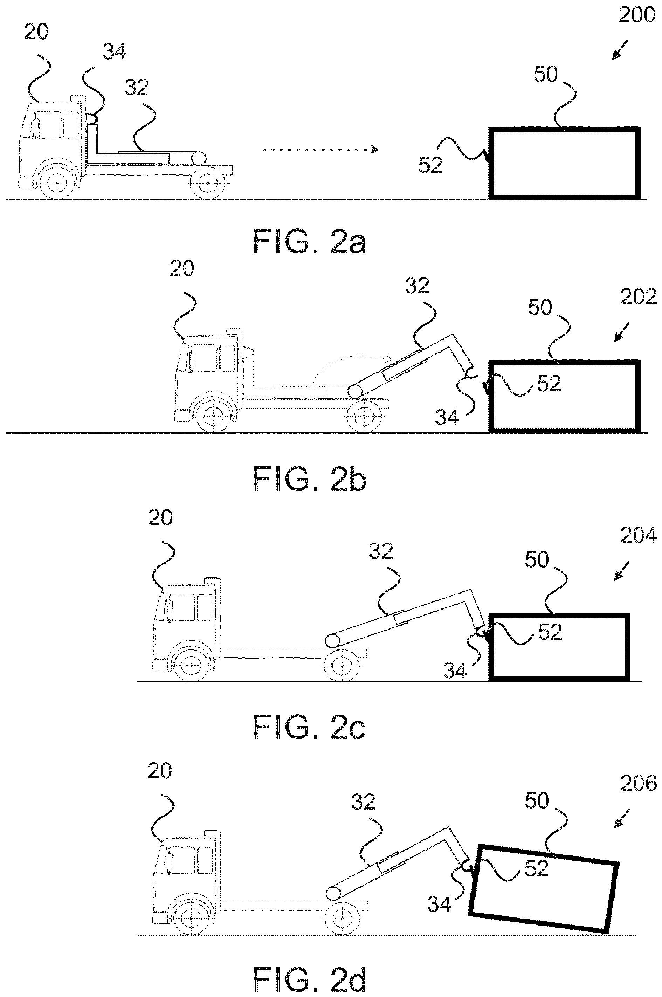

Figs. 2a-d illustrate an example of a load handling sequence. The load handling sequence may comprise one or more phases 200, 202, 204, 206. The load handling controller may be arranged for causing the load handling sequence to be carried out by the MLHA 30. Any or all of the one or more phases may be arranged to be performed by the controller in an autonomous manner.

The load handling sequence may comprise a vehicle approach phase 200, e.g. as illustrated in Fig. 2a. In the vehicle approach phase, the cargo vehicle 20 approaches the load 50, e.g. by reversing towards the load.

The load handling sequence may comprise a load attachment tool approach phase 202, e.g. as illustrated in Fig. 2b. In the load attachment tool approach phase, the boom 32 is moved (relative to the cargo vehicle), e.g. as directed by the controller 100, to have the load attachment tool 34 approach the load 50, e.g. by tilting and/or extending the boom towards the load. During this phase, the load attachment tool may be directed towards the matching interface 52, e.g. by the controller. The load attachment tool approach phase may take place while the vehicle is moving or while the vehicle is stationary.

The load handling sequence may comprise a coupling phase 204, e.g. as illustrated in Fig. 2c. In the coupling phase, the load attachment tool 34 is coupled to the load 50, either directly or indirectly, e.g. via the object, e.g. as directed by the controller 100. This may be done in a manner to form an attachment allowing the load to be loaded to the vehicle using the MLHA 30. In particular, the load attachment tool may be coupled with the matching interface 52, e.g. by a hook connection to a bail bar. The coupling phase may take place while the vehicle 20 is moving or while the vehicle is stationary.

The load handling sequence may comprise a lifting phase 206, e.g. as illustrated in Fig. 2d. In the lifting phase, the load attachment tool 34 is used to lift the load to the vehicle 20, e.g. as directed by the controller 100. The lifting phase may take place while the vehicle 20 is moving or while the vehicle is stationary.

Above, the load handling sequence corresponds to loading the load 50. The load handling sequence may also comprise or consist of unloading the load, in which case the phases presented above may be performed in reverse. The load handling sequence may comprise a lowering phase, which may correspond to the lifting phase 206 in reverse, for lowering the load 50 from the vehicle 20. The load handling sequence may comprise a decoupling phase, which may correspond to the coupling phase 204 in reverse, for decoupling the load attachment tool 34 from the load 50. The load handling sequence may comprise a load attachment tool withdraw phase, which may correspond to the load attachment tool approach phase 202 in reverse, for withdrawing the load attachment tool 34 from the load 50.

The load handling sequence may comprise any number of phases and the phases may include one or more additional phases not described here. For example, any phase described such as the coupling phase may be divided into multiple phases, allowing fine control of the load handling.

During the load handling, e.g. during any or all phases of the load handling sequence, the controller may provide active compliance for the load attachment tool 34. The controller may be arranged for tracking a current phase of the load handling sequence, in which case control instructions, e.g. a degree of active compliance, provided by the controller may be adjusted based on the phase of the load handling sequence.

In particular, active compliance may be provided during the coupling phase 204. During the coupling phase, the load attachment tool 34 makes contact with the object, causing an impact with the object. Active compliance can be used to mitigate the impact. However, active compliance may also be provided already during the load attachment tool approach phase 202. This is because the position of the load can be uncertain for the controller, e.g. due to incomplete measurement data. The accuracy of all sensor systems is always limited, at least to some degree, and the view to the load may also become occluded for the sensors as the vehicle approaches the load. Being able to handle the uncertainty also allows more flexibility in positioning the sensors.

During the lifting phase 206, active compliance may be provided but it may also be switched off or its degree may be lowered, allowing the load attachment tool 34 to stiffly engage the load. In general, the degree of compliance provided may be different for two or more different phases of the load handling sequence. The degree of compliance may also be changed depending on the position of the load attachment tool, e.g. by increasing the degree of compliance when the load attachment tool approaches the object and/or the load 50. For loading, the degree for compliance may be largest during the coupling phase 204. For unloading, the degree of compliance may be increased, at least, during the lowering phase and/or the decoupling phase, allowing the load to be lowered without damage and/or the load attachment tool to be decoupled without damage.

To provide active compliance for the load handling, the load handling controller 100 can be arranged to determine an estimated contact force for a contact between the load attachment tool 34 and the object, such as the load 50 or the intermediate object. The estimated contact force can be measured, e.g. by one or more of the sensors 40, and/or calculated. For example, the estimated contact force may be measured directly by a force sensor, which may be arranged at the load attachment tool. An example of such a sensor is a six-degree-of-freedom force/moment sensor, which may be based on strain-gauge technology and/or optics. However, the estimated contact force can also be obtained indirectly, in particular by measuring two or more parameters of the MLHA 30 and/or the vehicle 20 and then calculating the estimated contact force based on these measurements.

As a specific example, the estimated contact force may be determined indirectly based on one or more indications of motion state of the cargo vehicle and/or the MLHA, such as the motion state of the boom and/or the motion state of the load attachment tool. The one or more indications of motion state of the cargo vehicle may include any or all of a position of the vehicle, a velocity of the vehicle and an acceleration of the vehicle. The one or more indications of motion state of the MLHA may include any or all of one or more positions of the MLHA, one or more velocities of the MLHA and one or more accelerations of the MLHA. Here, any or all of the values measured for the MLHA may correspond to values for the boom and/or the load attachment tool, for example values for one or more joints of the boom. For determining the one or more indications of the cargo vehicle and/or the MLHA, the arrangement 10 may comprise one or more sensors, such as motion state sensors. However, sensors of the MLHA and/or the vehicle may be utilized for this purpose as well.

The estimated contact force may be determined based on, in addition to the one or more indications of motion state of the cargo vehicle and/or the MLHA, one or more indications of actuation state of the one or more actuators. The one or more indications of actuation state may include one or more indications of degree of actuation, such as a force and/or torque exerted by any or all of the one or more actuators. For actuator(s) comprising or consisting of hydraulic cylinder (s), the degree of actuation may correspond to one or more cylinder pressures, e.g. cylinder pressures from the first cylinder chamber and the second cylinder chamber of the double acting hydraulic cylinder(s). For determining the one or more indications of actuation state, the arrangement 10 may comprise one or more sensors, such as force and/or torque sensors and/or cylinder pressure sensors. However, sensors of the MLHA and/or the vehicle may be utilized for this purpose as well.

The estimated contact force may be calculated, for example, as follows. A first force corresponding to the actuation state from the one or more indications of the actuation state, e.g. as a cylinder chamber-pressure induced piston force, is determined. Also, a second force corresponding to the motion state of the cargo vehicle and/or the MLHA from the one or more indications of motion state of the cargo vehicle and/or the MLHA, e.g. as obtained from motion sensor data indicating one or more positions, velocities and accelerations of the one or more joints of the boom, is determined. In absence of external forces, such as the contact force, the first force should align with the second force. Accordingly, the estimated contact force may be determined, in particular in the joint space, as a difference of the first force and the second force, e.g. by the load handling controller. The estimated contact force may be determined separately for different actuators of the one or more actuators. When the estimated contact force is provided in joint space, it can be mapped to the task space using a Jacobian matrix. It is noted that the estimated contact force can be provided in the joint space, thereby indicating contact force directed to the boom (e.g. to the one or more joints) and/or in the task space, thereby indicating contact force directed to the load attachment tool. The estimated contact force may be provided, for example, by any of the methods described in "Stability-Guaranteed Nonlinear Model-Based Control of Hydraulic Robotic Manipulators" (Koivumäki J., Tampere University of Technology, Publication 1446, ISBN 978-952-15-3894-0).

The controller may be arranged for compensating internal friction within the MLHA, e.g. by determining the estimated contact force in the absence of the contact between the load attachment tool and the object. Such an estimated contact force may be used as a baseline value for the estimated contact force. The baseline value may be dependent on the state of the one or more actuators so it may be calibrated for variable states of the one or more actuators.

The estimated contact force may be determined by the controller 100 during an extended contact between the load attachment tool 34 and the object and/or during an impact between the load attachment tool and the object. Accordingly, the estimated contact force may correspond to a compression force and/or to an impact force, e.g. depending on the phase of the load handling sequence. During the coupling phase, the controller may be arranged for monitoring the estimated contact force to prevent a stiff impact between the load attachment tool and the object. The controller allows contact forces, and impact forces in particular, between the load attachment tool and the object to be mitigated.

The load handling controller 100 can be arranged to obtain a value for a responsiveness parameter. The responsiveness parameter indicates responsiveness of the load attachment tool 34 to the contact between the load attachment tool and the object (herein also "the responsiveness"). High responsiveness indicates that the load attachment tool yields in the contact, whereas low responsiveness indicates that the load attachment tool remains stiff in the contact. High responsiveness may thus correspond to increased compliance, whereas low responsiveness may correspond to decreased compliance. While the responsiveness as such refers to the actual physical situation, the responsiveness parameter can be defined as a control parameter in any applicable way. For example, the responsiveness parameter(s) may correspond to any off stiffness, damping and mass, e.g. as being directly or or inversely proportional to these.

The value for the responsiveness parameter may be obtained in one or more ways, e.g. by receiving it from the operator, for example through the user interface 140. Alternatively or additionally, the value for the responsiveness parameter may also be pre-defined for the controller, e.g. as an installation parameter. For example, the controller may be arranged to utilize two or more different values for the responsive parameter depending on situation, e.g. different values for different phases of the load handling sequence. Yet alternatively or additionally, the value for the responsiveness parameter may also be derived dynamically, e.g. in real time. This can be done based on situational information for the load handling, for example it can be based on the data from one or more of the sensors 40. The controller 100 may be arranged to obtain values for multiple response parameters indicating the responsiveness of the load attachment tool to the contact, e.g. one or more responsiveness parameters corresponding to stiffness, one or more responsiveness parameters corresponding to damping, and/or one or more responsiveness parameters corresponding to mass, such as a mass matrix, e.g. directly or as an inverse. Any or all of the responsiveness parameters may be provided for indicating response in one, two or three spatial dimensions. Alternatively or additionally, any or all of the responsiveness parameters may be provided for indicating response in one, two or three rotational dimensions. As an example, the responsiveness parameter(s) may correspond to a scalar, a 3x3 matrix (e.g. for indicating response in three spatial dimensions), a 6x6 matrix (e.g. for indicating response in three spatial and three rotational dimensions), or even a larger matrix.

The load handling controller 100 may be arranged for providing the value of the responsiveness parameter and/or the estimated contact force, or any indicator derived from at least one of these, to the operator, e.g. via the user interface 140, for example on display. This allows providing the operator information about the operation of the arrangement.

The load handling controller 100 can be arranged to adapt an actuation of the one or more actuators 36 of the MLHA 30 for actuating movement of the boom 32 (herein also "the actuation") based on the estimated contact force and the value(s) for the responsiveness parameter(s). Adapting the actuation may comprise adjusting a degree of actuation for any or all of the one or more actuators and/or adjusting a direction of actuation for any or all of the one or more actuators. As indicated above, the degree of actuation may correspond to the force and/or torque exerted by any or all of the one or more actuators, e.g. one or more cylinder pressures. The direction of actuation may be adjusted by changing the spatial and/or rotational direction of movement for the boom and/or the load attachment tool.

As the degree of compliance may be different for two or more different phases of the load handling sequence, the controller may be arranged to adapt the actuation of the one or more actuators based on the phase of the load handling sequence. Accordingly, the value for the responsiveness parameter may be based on the phase of the load handling sequence. This allows the current phase of the load handling sequence to affect the responsiveness, e.g. so that the responsiveness is higher in the coupling phase than in the lifting phase. The controller may be arranged for changing the responsiveness continuously and/or in discrete manner. The value for the responsiveness parameter can also be based on a position indicator for the load attachment tool. The controller may thus be arranged to change the value as the load attachment tool approaches the object and/or the load, e.g. for increasing the responsiveness. This allows the uncertainty in the position of the object/load to be accounted for as the load attachment tool becomes more compliant. The position indicator may be based, for example, on a state of the boom (e.g. on an orientation of the boom and/or an extension of the boom), on an estimated absolute position of the load attachment tool, and/or on an estimated relative position of the load attachment tool (e.g. with respect to the vehicle and/or the object/load). Accordingly, as the certainty of the load attachment tool not colliding with the object decreases, the responsiveness may be increased. This may be done by the controller by altering the value for the responsiveness parameter(s).

The load handling controller 100 may be arranged for utilizing different values for the responsiveness parameters in different situations, causing the actuation of the one or more actuators to be different. The controller may be arranged for utilizing a first value for the responsiveness parameter when the load attachment tool is uncoupled with respect to the load and a second value for the responsiveness parameter tool when the load attachment tool is coupled to the load. The first value may indicate larger responsiveness of the load attachment tool to the contact than the second value. The responsiveness may thus be larger when the first value is used, allowing increased compliance, e.g. for performing the coupling of the load attachment tool to the load.

However, it should be noted that the load handling controller may also be arranged for the active compliance to be switched off. Thus, more generally, the load handling controller may be arranged to permit the one or more actuators to provide a first degree of responsiveness for the load attachment tool when the load attachment tool is uncoupled with respect to the load and a second degree of responsiveness for the load attachment tool when the load attachment tool is coupled to the load, wherein the first degree of responsiveness is larger than the second degree of responsiveness. The first degree of responsiveness may be obtained by utilizing a first value for the responsiveness parameter. The second degree of responsiveness may be obtained by switching off the active compliance, in which case no responsiveness parameters need to be used.

The load handling controller 100 can be arranged for providing the active compliance, in particular for the load attachment tool, by various mechanisms such as force control and/or impedance control. As a specific example, the load handling controller may comprise a nonlinear model-based controller (NMBC) for providing the active compliance, which may be arranged for providing the control, such as the impedance control.

For force control, the controller may be arranged for direct control of the contact force, e.g. so that a magnitude of the estimated contact force is prevented from exceeding a threshold magnitude and/or from increasing too quickly. The magnitude may be the total magnitude of the threshold force or a magnitude of one or more components of the threshold force such as an x-, y-, or z-component. The controller can thus be arranged to adapt the actuation of the one or more actuators to prevent the magnitude of the estimated contact force from exceeding a threshold magnitude and/or a rate of change for the estimated contact force from exceeding a threshold rate. The rate of change may be the rate of change of the total magnitude of the threshold force or a rate of change of the magnitude of one or more components of the threshold force such as an x-, y-, or z-component. The controller may be arranged for providing force control as hybrid position/force control, in which case position and force may be controlled in two orthogonal subspac-es, and/or as unified position force control, in which case both position and force may be controlled along one or more task space directions. For impedance control, the relationship between the force and the motion may be controlled without directly controlling the force or the motion for the load attachment tool. It should be understood that all references to impedance control herein can be understood as impedance and/or admittance control. The reaction of the load attachment tool to the contact with the object may be controlled according to a target force/motion relationship. This may be done by the actuation of the one or more actuators. The controller may be arranged for providing joint space compliance control, e.g. for the joint(s) of the boom, and/or task space compliance control, e.g. for the load attachment tool. The load handling controller may be arranged for providing impedance control for the load attachment tool, for example, by any of the methods described in "Stability-Guaranteed Nonlinear Model-Based Control of Hydraulic Robotic Manipulators" (Koivumäki J., Tampere University of Technology, Publication 1446, ISBN 978-952-15-3894-0).

Regardless of the way the active compliance is provided, the load handling controller may be arranged for preventing a threshold resistance for the relative interaction of the load attachment tool and the object (herein also "the threshold resistance") to be exceeded. For force control, the threshold resistance may correspond to the threshold magnitude and/or the threshold rate, as described above. For impedance control, the threshold resistance may correspond to a threshold for force-motion relationship.

In addition, or as an alternative, to being used as a control parameter, the estimated contact force may be used for detecting an occurrence of one or more events for the load handling. For example, the load handling controller may be arranged to determine the phase of the load handling based on operator input and/or the estimated contact force. The controller may be arranged to determine whether a contact has been made between the load handling tool and the object (herein also "the contact event") based on the estimated contact force, e.g. by monitoring the estimated contact force and detecting an increase thereon. The controller may also be arranged to determine whether coupling of the load attachment tool to the load is completed (i.e. an attachment has been made, herein also "the coupling event") based on the estimated contact force, e.g. by monitoring the estimated contact force and detecting it stabilizing at a higher level after an increase, such as the increase mentioned above (stabilization may throughout this disclosure be understood, for example, as the stabilization of the total magnitude of the estimated contact force and/or as a stabilization of the magnitude of any of the components of the estimated contact force). The controller may be arranged to determine whether the load has been moved by the MLHA to a target position based on the estimated contact force (herein also "the positioning event"), e.g. by monitoring the estimated contact force and detecting it stabilizing at a lower level after a drop. The target position may be a load bed of the vehicle or ground, for example. The controller may be also arranged to determine whether the decoupling of the load attachment tool from the load is completed (i.e. a detachment has been made, herein also "the decoupling event") based on the estimated contact force, e.g. by monitoring the estimated contact force and detecting it stabilizing at a lower level after a drop and/or detecting it vanishing or at least having its magnitude decrease below a threshold value. The decoupling event may take place during the loading, e.g. when the load attachment tool is decoupled from the load after the load has been positioned on the cargo vehicle, e.g. on the load bed thereof. The decoupling event may also take place during the unloading, e.g. when the load attachment tool is decoupled from the load after the load has been positioned on the target position, e.g. on the ground.

The controller may be arranged for automatically moving to a next phase of the load handling sequence based on detecting the occurrence of an event for the load handling based on the estimated contact force. This may be done for any or all of the events described above, i.e. for the contact event, the coupling event, the positioning event, and/or the decoupling event. The controller may, alternatively or additionally, be arranged to detect an unsafe load handling condition based on the estimated contact force, e.g. by monitoring the estimated contact force and detecting a pattern in the estimated contact force. The pattern may correspond to a pre-defined pattern indicating an unsafe condition or a pattern which has not been pre-defined as a safe pattern.

The estimated contact force in this disclosure may be understood as an estimate of the (total) contact force or as an estimate of a component of the (total) contact force, e.g. as an estimate of an x-, y-, or z-component of the contact force. Accordingly, the controller may be arranged to determine a first estimated contact force in a first direction and a second estimated contact force in a second direction, wherein the first direction and the second direction are different. The second direction can thus be non-parallel with respect to the first direction. The second direction may be orthogonal to the first direction but it does not necessarily need to be.

The first estimated contact force and the second estimated contact force may be used for controlling the actuation and/or for detecting the one or more events for the load handling. For example, estimated contact force in a vertical direction may be used for detecting lifting and/or estimated contact force in a horizontal direction may be used for detecting pulling. The controller may be arranged for detecting contact forces also in three or more dimensions. In general, the first direction may be a spatial direction or a rotational direction. Similarly, the second direction may be a spatial direction or a rotational direction. As noted above, the controller may be arranged for controlling the movement of the load attachment tool in multiple dimensions, which may include one, two or three spatial dimensions and/or one, two or three rotational dimensions, e.g. three spatial dimensions and three rotational dimensions.

The load handling controller may be arranged for utilizing one value ("third value") for the responsiveness parameter in the first direction and another value ("fourth value) for the responsiveness parameter in the second direction. The third value indicates a larger responsiveness of the load attachment tool to the contact than the fourth value, thereby the responsiveness in the first direction can be made larger than the responsiveness in the second direction. For example, the first direction may correspond to a coupling direction and the second direction may correspond to a lifting direction. In practice, the coupling direction and the lifting direction can be determined based on the application, e.g. based on the shape of the load attachment tool and/or the matching interface. As another example, the first direction may correspond to a lifting direction and the second direction may correspond to a pulling direction. Larger responsiveness in the lifting direction can thus also facilitate the coupling as the controller may be arranged the load to be lifted, partially or fully, before it is pulled. The first direction, or the lifting direction, may have a larger vertical component than the second direction, or the pulling direction. The second direction, or the pulling direction, may have a larger horizontal component than the first direction, or the lifting direction.

The load handling controller may also be arranged to guide the load attachment tool based on the first estimated contact force and the second estimated contact force. This can be utilized to establish a coupling of the load attachment tool with the load. For example, the load attachment tool may be moved in the first direction (alternatively second direction) until the threshold resistance is established, after which the load attachment tool may be moved in some other direction, such as the second direction (alternatively first direction). The controller may thus be arranged to guide the load attachment tool, such as a hook of the load attachment tool, with respect to the matching interface 52, such as a bail bar. The determination of the estimated contact force in two directions allows fine control of the movements of the load attachment tool with respect to the matching interface allowing the shapes of the load attachment tool and the matching interface to be accounted for by the controller.

The load handling controller may also be arranged to generate one or more haptic feedback control signals based on the estimated contact force. These allow providing haptic feedback, such as vibration, to the operator, for example via the user interface 140, as described above. The haptic feedback allows the operator to feel the contact of the load attachment tool to the object. The strength of the haptic feedback may be based on the estimated contact force, in particular on a magnitude of the estimated contact force.

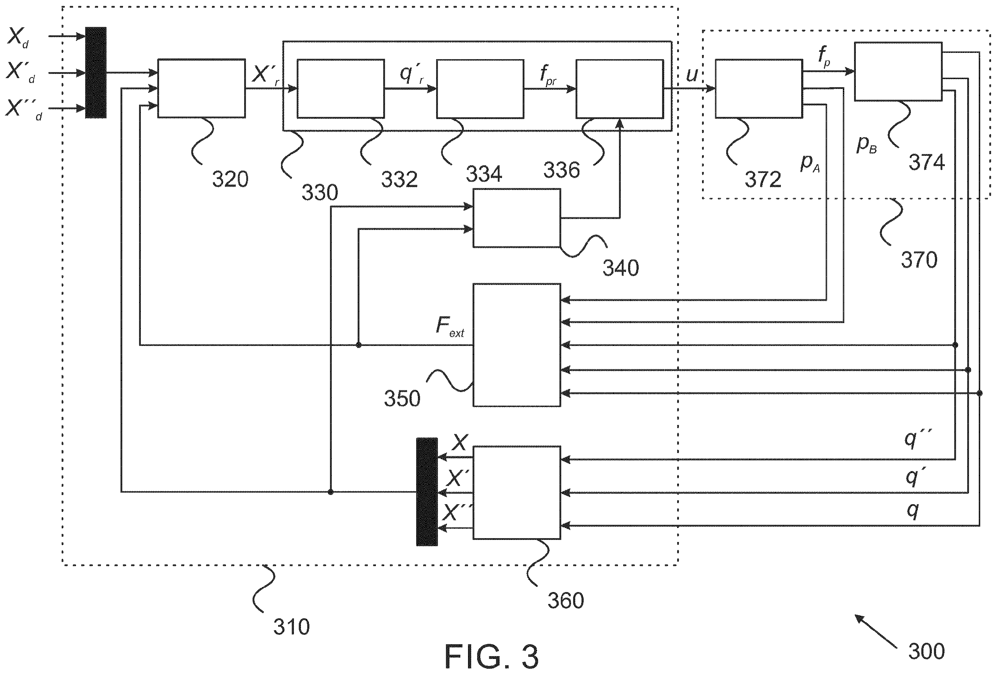

Fig. 3 illustrates a system 300, wherein the load handling controller 100 may be embedded, e.g. as a safety-rated programmable logic controller (PLC). This illustrates both hardware components and high-level software architecture, which may be utilized in the context of the present solutions. A main signal flow for constructing feedforward control with *Xᵣ'* ⇒ *qᵣ'* ⇒ *fₚᵣ* ⇒ *u,* is illustrated.

The system 300 comprises a control system software 310 (herein also "the software"), which may provide contact force estimation and stability monitoring, and a physical system 370. The control system software may be provided at the load handling controller 100. It comprises procedures for task space impedance control 320, for a non-linear model-based controller 330, for pressure-based load monitoring 340, for a contact-force estimator 350 and for joint space to task space mapping 360, e.g. with a Jacobian. The nonlinear model-based controller comprises procedures for task space to joint space mapping 332, e.g. with a Jacobian, for control of the dynamics of the load attachment tool 334 and for control of the dynamics of the actuator(s) 336.

The physical system 370 may be provided, for example, at the vehicle and/or at the MLHA. It comprises the sensors 40, which may be include one or more sensors for measuring the one or more cylinder pressures, e.g. a first pressure *p_{A}* from the first cylinder chamber and a second pressure *p_{B}* from the second cylinder chamber of the double acting hydraulic cylinder, and one or more sensors for measuring the motion state, e.g. positions *q,* velocities *q'* and accelerations *q"* of the boom, e.g. of the one or more joints of the boom. The physical system is thus represented in the illustration as a first procedure 372 for providing the dynamics of the actuator(s) and as a second procedure 374 for providing the dynamics of the load attachment tool. As noted above, the sensors 40 may also comprise one or more sensors for observing a state of the vehicle 20, e.g. motion sensor(s) to measure motion state of the vehicle. These may be utilized instead of or in addition to the one or more sensors for measuring the motion state of the boom.

Possible inputs and outputs from different procedures and their interconnections are illustrated in Fig. 3. The joint space values *q, q', q"* may be mapped to task space values *X, X', X'',* e.g. with a Jacobian matrix of the system, after which they may directly describe the motion state of the load attachment tool. The desired values for these parameters are expressed as *X_{d}, X_{d}', X_{d}".* Accordingly, required values *Xᵣ', qᵣ', fₚᵣ* include required linear/angular velocity (e.g. in Cartesian space), required joint space velocity and required actuator force/torque, respectively. All these may be represented by vectors, e.g. for six degrees of freedom corresponding to both translation and rotation in three dimensional space. The estimated contact force is obtained from the contact-force estimator 350 and indicated by *Fₑₓₜ.* Control output, such as hydraulic valve opening for adapting the actuation of the one or more actuators, is illustrated with *u*. Finally, actuator output force/torques, which can also be measure, is illustrated as well. It is noted that the expression required velocities may be used instead of desired motion trajectories, since the latter can be used analogously to desired motion trajectories, e.g. for providing feedforward control.

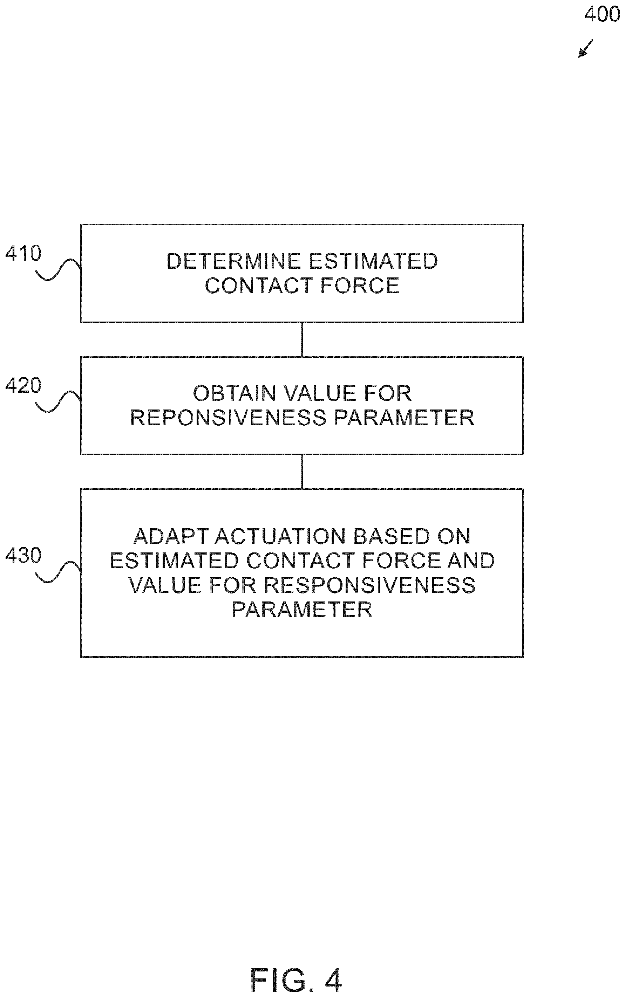

It is noted that the present solutions are not limited to impedance control and other control methods such as direct force control, e.g. hybrid position/force control, may be utilized as well. For this, the procedure for task space impedance control 320 illustrated in Fig. 4 may be replaced by task-space force control, e.g. direct or hybrid, with desired task space force *F_{d}* as input. In addition, the inputs may still include also the desired task space positions *X_{d},* velocities *X_{d}'* and accelerations *X_{d}",* allowing hybrid control.

Fig. 4 illustrates a method 400, which may be used for controlling the MLHA 30 as described herein for the load handling. The method, or any of its parts in any combination, may be performed by the controller 100. The method 400 comprises several parts which may be performed independently from each other. The parts may be performed in the indicated order or in any other applicable order including concurrently.

The method 400 comprises determining 410 the estimated contact force for the contact between the load attachment tool 34 and the object. The method also comprises obtaining 420 the value for the responsiveness parameter indicating the responsiveness of the load attachment tool to the contact. Then, the method comprises adapting 430 the actuation of the one or more actuators 36 of the MLHA 30 for actuating movement of the boom 32 based on the estimated contact force and the value for the responsiveness parameter.

Any or all of the controllers described above, such as the load handling controller, may be implemented in software, hardware, application logic or a combination of software, hardware and application logic. The application logic, software or instruction set may be maintained on any one of various conventional computer-readable media. A "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The examples can store information relating to various processes described herein. This information can be stored in one or more memories, such as a hard disk, optical disk, magneto-optical disk, RAM, and the like. One or more databases can store the information used to implement the embodiments. The databases can be organized using data structures (e.g., records, tables, arrays, fields, graphs, trees, lists, and the like) included in one or more memories or storage devices listed herein. The databases may be located on one or more devices comprising local and/or remote devices such as servers. The processes described with respect to the embodiments can include appropriate data structures for storing data collected and/or generated by the processes of the devices and subsystems of the embodiments in one or more databases.

All or a portion of the embodiments can be implemented using one or more general purpose processors, microprocessors, digital signal processors, micro-controllers, and the like, programmed according to the teachings of the embodiments, as will be appreciated by those skilled in the computer and/or software art (s). Appropriate software can be readily prepared by programmers of ordinary skill based on the teachings of the embodiments, as will be appreciated by those skilled in the software art. In addition, the embodiments can be implemented by the preparation of application-specific integrated circuits or by interconnecting an appropriate network of conventional component circuits, as will be appreciated by those skilled in the electrical art(s). Thus, the embodiments are not limited to any specific combination of hardware and/or software.

The different functions discussed herein may be performed in a different order and/or concurrently with each other.

Any range or device value given herein may be extended or altered without losing the effect sought, unless indicated otherwise. Also any example may be combined with another example unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

Numerical descriptors such as 'first', 'second', and the like are used in this text simply as a way of differentiating between parts that otherwise have similar names. The numerical descriptors are not to be construed as indicating any particular order, such as an order of preference, manufacture, or occurrence in any particular structure.

Although the invention has been described in conjunction with a certain type of apparatus and/or method, it should be understood that the invention is not limited to any certain type of apparatus and/or method. While the present inventions have been described in connection with a number of examples, embodiments and implementations, the present inventions are not so limited, but rather cover various modifications, and equivalent arrangements, when falling within the purview of the claims. Although various examples have been described above with a certain degree of particularity, or with reference to one or more individual embodiments, those skilled in the art could make numerous alterations to the disclosed examples without departing from the scope of this specification.

## Claims

1. A load handling controller for controlling load handling of a cargo vehicle, the load handling controller being arranged for controlling movement of a mobile load handling arrangement comprising a boom and a load attachment tool for handling a load for the cargo vehicle;
wherein the load handling controller is arranged to:
determine an estimated contact force for a contact between the load attachment tool and an object;
obtain a value for a responsiveness parameter indicating the responsiveness of the load attachment tool to the contact; and
adapt an actuation of one or more actuators of the mobile load handling arrangement for actuating movement of the boom based on the estimated contact force and the value for the responsiveness parameter.

2. The load handling controller according to claim 1, arranged to adapt the actuation of the one or more actuators based on a phase of a load handling sequence.

3. The load handling controller according to any preceding claim, wherein the value for the responsiveness parameter is based on a position indicator for the load attachment tool.

4. The load handling controller according to any preceding claim, wherein the estimated contact force corresponds to an impact force between the load attachment tool and the object.

5. The load handling controller according to any preceding claim, arranged to permit the one or more actuators to provide a first degree of responsiveness for the load attachment tool when the load attachment tool is uncoupled with respect to the load and a second degree of responsiveness for the load attachment tool when the load attachment tool is coupled to the load, wherein the second degree of responsiveness is larger than the first degree of responsiveness.

6. The load handling controller according to any preceding claim, arranged to determine whether coupling of the load attachment tool to the load is completed based on the estimated contact force.

7. The load handling controller according to any preceding claim, arranged to determine a first estimated contact force in a first direction and a second estimated contact force in a second direction, the second direction being non-parallel with respect to the first direction.

8. The load handling controller according to claim 7, arranged for utilizing a third value for the responsiveness parameter in the first direction and a fourth value for the responsiveness parameter in the second direction, wherein the third value indicates a larger responsiveness of the load attachment tool to the contact than the fourth value.

9. The load handling controller according to claim 7 or 8, arranged to guide the load attachment tool to establish a coupling with the load based on the first estimated contact force and the second estimated contact force.

10. The load handling controller according to any preceding claim, arranged to generate one or more haptic feedback control signals based on the estimated contact force.

11. The load handling controller according to any preceding claim, arranged to determine the estimated contact force based on one or more indications of motion state of the boom and/or the cargo vehicle and one or more indications of actuation state of the one or more actuators.

12. An arrangement comprising:
- a mobile load handling arrangement comprising a boom and a load attachment tool for handling a load for a cargo vehicle; and
- the load handling controller according to any of the preceding claims;
wherein the load handling controller is arranged for controlling movement of the mobile load handling arrangement for handling the load for the cargo vehicle.

13. The arrangement according to claim 12, comprising the cargo vehicle.

14. A method for controlling a mobile load handling arrangement comprising a boom and a load attachment tool for handling a load for the cargo vehicle, the method comprising:
- determining an estimated contact force for a contact between the load attachment tool and an object;
- obtaining a value for a responsiveness parameter indicating the responsiveness of the load attachment tool to the contact; and
- adapting an actuation of one or more actuators of the mobile load handling arrangement for actuating movement of the boom based on the estimated contact force and the value for the responsiveness parameter.

15. A computer program product comprising instructions which, when executed by a computer, cause the computer to carry out the method of claim 14.
